# EUROPEAN PATENT APPLICATION

(11) **EP 4 246 532 A1**
(43) Date of publication of application: **20.09.2023**
(21) Application number: 21892432.2
(22) Date of filing: 09.11.2021
(51) Int. Cl.: G21C 9/016, G21C 15/18

(54) **SYSTEM FOR CONFINING AND COOLING MELT FROM THE CORE OF A NUCLEAR REACTOR**

(30) Priority: 10.11.2020 RU 2020136899
(71) Applicant: Joint Stock Company "Atomenergoproekt", Moscow 107996 (RU); Science and Innovations - Nuclear Industry Scientific Development, Private Enterprise, Moscow 119017 (RU)
(72) Inventor: SIDOROV, Aleksandr Stalevich, Moscow 115612 (RU); SIDOROVA, Nadezhda Vasilievna, Moscow 115612 (RU); DZBANOVSKAYA, Tatyana Yaropolkovna, Moscow 107113 (RU); BADESHKO, Kseniya Konstantinovna, Volgograd 400066 (RU)
(74) Representative: Osmans, Voldemars
(86) International application number: PCT/RU2021/000492
(87) International publication number: WO 2022/103301

(57) **Abstract**

The invention relates to the field of nuclear energy, in particular, to the systems ensuring safety of nuclear power plants (NPPs), and can be used in severe accidents resulting in destruction of the reactor pressure vessel and containment.

The technical result of the claimed invention is to enhance reliability of the corium localizing and cooling system of a nuclear reactor.

The objective, which the claimed invention is intended to achieve, is to prevent destruction of the corium localizing and cooling system within the junction area between the vessel for the corium receipt and distribution and the cantilever truss under the conditions on non-axisymmetric corium escape from the reactor pressure vessel and falling of the reactor pressure vessel head fragments into the vessel at the initial stage of the corium cooling with water, and consequently to prevent any ingress of water intended for external cooling of the vessel into the vessel.

The set objective is achieved due to the fact that the corium localizing and cooling system of a nuclear reactor additionally comprises thermal protection suspended to the cantilever truss, the membrane installed between the cantilever truss and the vessel, and the bandage plates installed on the external and internal side of the membrane.

## Description

### Technical field of the invention

The invention relates to the field of nuclear energy, in particular, to the systems ensuring safety of nuclear power plants (NPPs), and can be used in severe accidents resulting in destruction of the reactor pressure vessel and containment.

Accidents with core meltdown that can take place in case of multiple failures of the core cooling systems pose the greatest radiation hazard.

In the course of such accidents the core melt - corium - escapes from the reactor pressure vessel by melting it as well as the core structures, and afterheat remaining in it may break the integrity of the NPP containment - the last barrier in the routes for release of radioactive products to the environment.

In order to prevent this it is required to localize the core melt (corium) escaping from the reactor pressure vessel and provide its continuous cooling up to its complete crystallization. This function is performed by the corium localizing and cooling system of the nuclear reactor which prevents damage to the NPP containment and thus protects the public and the environment against radiation exposure in case of any severe accidents of nuclear reactors.

### Prior art

A corium localizing and cooling system [1] of a nuclear reactor, comprising a guide plate installed under the reactor pressure vessel and resting upon a cantilever truss, a multi-layered vessel installed on embedded parts in the concrete shaft foundation with a flange equipped with thermal protection, and a filler inside the multi-layered vessel consisting of a set of cassettes installed onto each other is known.

This system has low reliability due to the following drawbacks:
- in case of non-axisymmetric escape of the corium from the reactor pressure vessel (lateral melt-through of the pressure vessel), sectoral destruction of the guide plate, the cantilever truss and thermal protections takes place in the reactor pressure vessel under the impact of internal pressure, and the shock wave of gas escaping together with the corium from the reactor pressure vessel propagates inside the multi-layered vessel volume and inside the peripheral volumes located between the multi-layered vessel, the filler and the cantilever truss and impacts the peripheral equipment that can result in destruction of the corium localizing and cooling system within the junction area between the multi-layered vessel and the cantilever truss causing ingress of cooling water intended for external cooling of the multi-layered vessel into the multi-layered vessel which can lead to a steam explosion and destruction of the system;
- in case of falling of the reactor pressure vessel head fragments or falling of the corium remnants from the reactor pressure vessel into the multi-layered vessel at the initial stage of the corium surface cooling with water shock-induced pressure increase takes place and affects the peripheral equipment that can result in destruction of the corium localizing and cooling system within the junction area between the multi-layered vessel and the cantilever truss causing ingress of cooling water intended for external cooling of the multi-layered vessel into the multi-layered vessel which can lead to a steam explosion and destruction of the system.

A corium localizing and cooling system [2] of a nuclear reactor, comprising a guide plate installed under the reactor pressure vessel and resting upon a cantilever truss, a multi-layered vessel installed on embedded parts in the concrete shaft foundation with a flange equipped with thermal protection, and a filler inside the multi-layered vessel consisting of a set of cassettes installed onto each other is known.

This system has low reliability due to the following drawbacks:
- in case of non-axisymmetric escape of the corium from the reactor pressure vessel (lateral melt-through of the pressure vessel), sectoral destruction of the guide plate, the cantilever truss and thermal protections takes place in the reactor pressure vessel under the impact of internal pressure, and the shock wave of gas escaping together with the corium from the reactor pressure vessel propagates inside the multi-layered vessel volume and inside the peripheral volumes located between the multi-layered vessel, the filler and the cantilever truss and impacts the peripheral equipment that can result in destruction of the corium localizing and cooling system within the junction area between the multi-layered vessel and the cantilever truss causing ingress of cooling water intended for external cooling of the multi-layered vessel into the multi-layered vessel which can lead to a steam explosion and destruction of the system;
- in case of falling of the reactor pressure vessel head fragments or falling of the corium remnants from the reactor pressure vessel into the multi-layered vessel at the initial stage of the corium surface cooling with water shock-induced pressure increase takes place and affects the peripheral equipment that can result in destruction of the corium localizing and cooling system within the junction area between the multi-layered vessel and the cantilever truss causing ingress of cooling water intended for external cooling of the multi-layered vessel into the multi-layered vessel which can lead to a steam explosion and destruction of the system.

A corium localizing and cooling system [3] of a nuclear reactor, comprising a guide plate installed under the reactor pressure vessel and resting upon a cantilever truss, a multi-layered vessel installed on embedded parts in the concrete vault foundation with a flange equipped with thermal protection, and a filler inside the multi-layered vessel consisting of a set of cassettes installed onto each other is known.

This system has low reliability due to the following drawbacks:
- in case of non-axisymmetric escape of the corium from the reactor pressure vessel (lateral melt-through of the pressure vessel), sectoral destruction of the guide plate, the cantilever truss and thermal protections takes place in the reactor pressure vessel under the impact of internal pressure, and the shock wave of gas escaping together with the corium from the reactor pressure vessel propagates inside the multi-layered vessel volume and inside the peripheral volumes located between the multi-layered vessel, the filler and the cantilever truss and impacts the peripheral equipment that can result in destruction of the corium localizing and cooling system within the junction area between the multi-layered vessel and the cantilever truss causing ingress of cooling water intended for external cooling of the multi-layered vessel into the multi-layered vessel which can lead to a steam explosion and destruction of the system;
- in case of falling of the reactor pressure vessel head fragments or falling of the corium remnants from the reactor pressure vessel into the multi-layered vessel at the initial stage of the corium surface cooling with water shock-induced pressure increase takes place and affects the peripheral equipment that can result in destruction of the corium localizing and cooling system within the junction area between the multi-layered vessel and the cantilever truss causing ingress of cooling water intended for external cooling of the multi-layered vessel into the multi-layered vessel which can lead to a steam explosion and destruction of the system.

### Disclosure of the invention

The technical result of the claimed invention is to enhance reliability of the corium localizing and cooling system of a nuclear reactor.

The objective, which the claimed invention is intended to achieve, is to prevent destruction of the corium localizing and cooling system within the junction area between the vessel and the cantilever truss under the conditions on non-axisymmetric corium escape from the reactor pressure vessel and falling of the reactor pressure vessel head fragments into the vessel at the initial stage of the corium cooling with water, and consequently to prevent any ingress of water intended for external cooling of the vessel into the vessel.

The set objective is achieved due to the fact that in accordance with the invention the corium localizing and cooling system of a nuclear reactor, comprising a guide plate, a cantilever truss, a vessel with a filler intended for the corium receipt and distribution, additionally comprises thermal protection suspended on the cantilever truss flange, a convex membrane with the upper and lower flanges connected to the upper and lower heat-conducting elements that are attached to the cantilever truss and the vessel flange respectively, bandage plates installed on the external and internal side of the membrane in such a way so that their upper ends are fastened rigidly to the upper flange of the membrane, and the lower ends are fastened to the lower flange of the membrane with the possibility for longitudinal and vertical movement in relation to the lower flange of the membrane.

In addition, according to the invention, the upper ends of the bandage plates in the corium localizing and cooling system of a nuclear reactor are attached to the upper flange of the membrane with the use of weld joints.

In addition, according to the invention, an aperture is made in the lower ends of the bandage plates and the lower membrane flange in the corium localizing and cooling system of a nuclear reactor, and a fastener equipped with an adjusting nut and a retainer is installed in this aperture.

Presence of the thermal protection, suspended on the cantilever truss flange in the corium localizing and cooling system of a nuclear reactor enabling to prevent any direct shock impact on the corium side and from the dynamic gas streams escaping from the reactor pressure vessel and impacting the junction area between the vessel and the cantilever truss, is an essential feature of the claimed invention.

Presence of a convex membrane with the upper and lower flanges connected to the upper and lower heat-conducting elements that are attached to the cantilever truss and the vessel flange respectively, bandage plates installed on the external and internal side of the membrane in such a way so that their upper ends are fastened rigidly to the upper flange of the membrane, and the lower ends are fastened to the lower flange of the membrane with the possibility for longitudinal and vertical movement in relation to the lower flange of the membrane in the system is another essential feature of the claimed invention. This position of the membrane allows for independent radial and azimuthal thermal expansions of the cantilever truss, independent movement of the cantilever truss and the vessel under any mechanical shock impacts on the components of the corium localizing and cooling system equipment, axial and radial thermal expansions of the vessel, and consequently to prevent any ingress of cooling water intended for external cooling of the vessel into the vessel. The bandage plates, in their turn, enable to maintain integrity of the membrane under the impact of any shock wave on the reactor pressure vessel side in case of its destruction and also to maintain integrity of the membrane under the impact of any shock wave generated at the initial stage of the corium surface cooling with water in case of falling of any reactor pressure vessel head fragments or corium remnants into the corium.

### Brief description of drawings

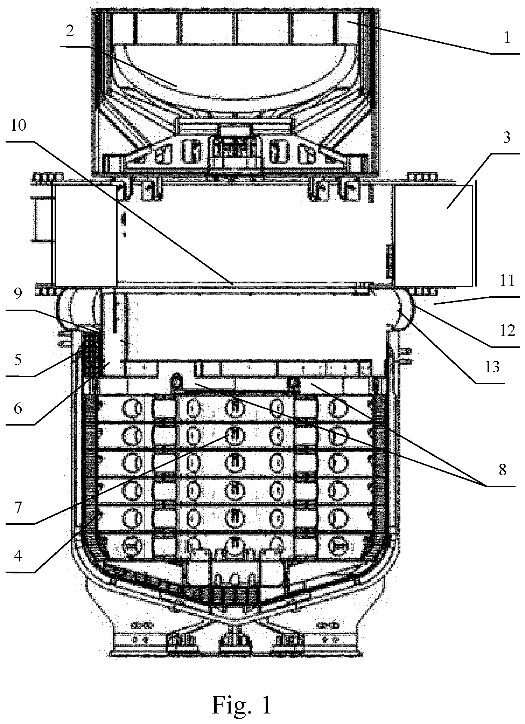

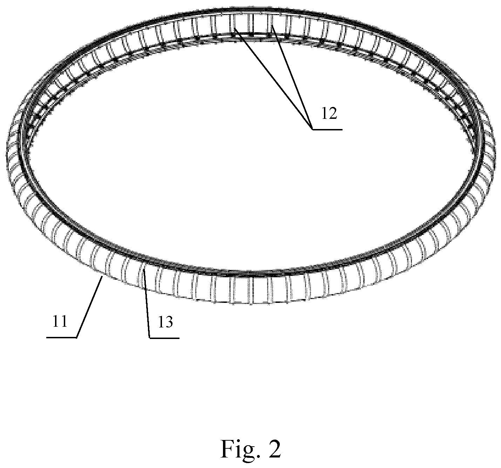

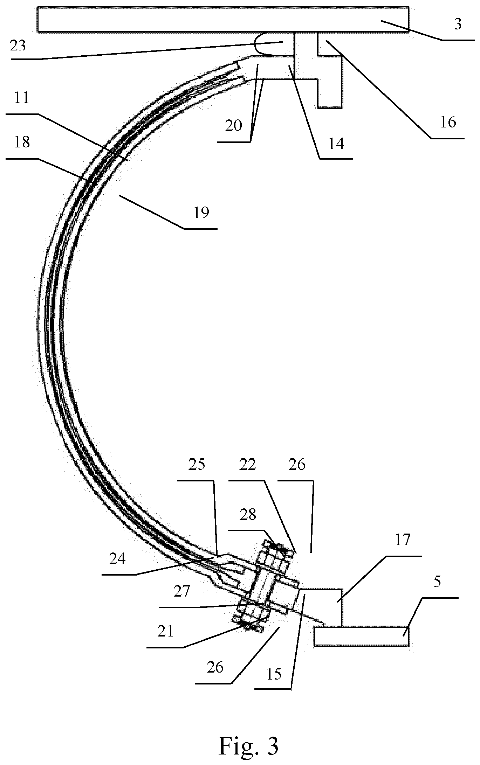

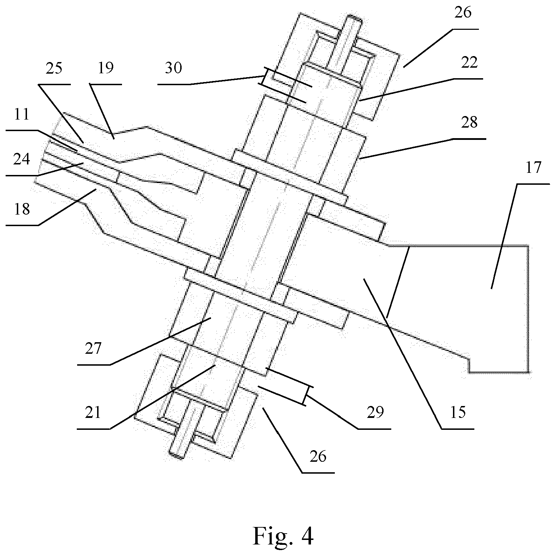

The corium localizing and cooling system of a nuclear reactor arranged in accordance with the claimed invention is shown in Fig. 1.
The membrane arranged in accordance with the claimed invention is shown in Fig. 2.
The membrane with installed bandage plates is shown in Fig. 3.
The fastener providing for the movement of bandage plates and adjustment of the gaps between the bandage plates and the membrane is shown in Fig. 4.

### Embodiments of the invention

As shown in Figs. 1-4, the corium localizing and cooling system of a nuclear reactor consists of the guide plate (1) installed under the reactor pressure vessel (2). The guide plate (1) rests upon the cantilever truss (3). The vessel (4) installed on embedded parts is located under the cantilever truss (3) in the concrete shaft foundation. The flange (5) of the vessel (4) is equipped with thermal protection (6). The filler (7) intended for the corium receipt and distribution is located inside the vessel (4). Water supply valves (8) installed in branch pipes are located along the vessel (4) periphery in its upper section (within the area between the filler (7) and the flange (5)). The convex membrane (11) is located between the flange (5) of the multi-layered vessel (4) and the lower surface of the cantilever truss (3). The convex side of the membrane (11) is directed outside the vessel (4) boundaries. The bandage plates (18), (19) are installed on both sides of the membrane (11). The upper ends of the bandage plates (18), (19) are fastened rigidly to the upper flange (14) of the membrane (11), for example, with the use of weld joints (20), and the lower ends of the bandage plates (18), (19) are attached to the lower flange (15) of the membrane (11) with the possibility for longitudinal and vertical movement in relation to the lower flange (15) of the membrane (11). Attachment of the bandage plates (18), (19) to the lower flange (15) of the membrane (11) is arranged with the use of fasteners (21), (22) providing for longitudinal and vertical movement of the bandage plates (18), (19) in relation to the lower flange (15) of the membrane (11) as well as adjustment of the gaps between the bandage plates (18), (19) and the membrane (11). The fasteners (21), (22) are installed in such a way so that to enable formation of the safety bandage gaps (24), (25). The thermal protection (9) is installed inside the vessel (4). The thermal protection (9) is suspended to the flange (10) of the cantilever truss (3). Suspension may be arranged, for example, with the use of heat-resistant fasteners. The thermal protection (9) is installed in such a way so that to overlap the upper section of the thermal protection (6) of the vessel (4) flange (5).

The claimed corium localizing and cooling system of a nuclear reactor operates as follows.

When the nuclear reactor pressure vessel (2) fails, the corium exposed to hydrostatic pressure of the corium and residual excess pressure of the gas inside the nuclear reactor pressure vessel (2) starts to flow onto the surface of the guide plate (1) held by the cantilever truss (3). The corium flowing down the guide plate (1) enters the vessel (4) and comes into contact with the filler (7). Partial melting of the thermal protection (9) takes place in case of sectoral non-axisymmetric corium flow. By partial destruction, the thermal protection (9) reduces the thermal impact of the corium on the protected equipment on the one hand, and decreases the temperature and chemical activity of the corium itself on the other hand.

The thermal protection (6) of the vessel (4) flange (5) protects its upper thick-walled inner part against the thermal impact of the corium surface from the moment of the corium entry into the filler (7) and till completion of the corium interaction with the filler, i.e. beginning of water cooling of the crust on the corium surface. The thermal protection (6) of the vessel (4) flange (5) is installed in such a way so that to protect the inner surface of the vessel (4) above the corium level formed in the vessel (4) in the course of interaction with the filler (7), namely the upper part of the vessel (4) which is thicker than the cylindrical part of the vessel (4) providing for normal (without any critical heat flux in the pool boiling mode) heat transfer from the corium to the water on the outer side of the vessel (4).

In the course of interaction between the corium and the filler (7), the thermal protection (6) of the vessel (4) flange (5) is heated and partially destroyed shielding the thermal radiation from the corium surface. Geometrical and thermophysical characteristics of the thermal protection (6) of the vessel (4) flange (5) are selected in such a way so that to provide its shielding on the corium surface side under all conditions, which in turn ensures independence of the protective functions from the time for completion of physical and chemical interaction of the corium with the filler (7). Thus, presence of the thermal protection (6) of the vessel (4) flange (5) ensures performance of protective functions prior to commencement of water supply onto the crust on the corium surface.

The thermal protection (9) suspended to the cantilever truss (3) above the upper level of the thermal protection (6) of the vessel (4) flange (5) covers the upper section of the thermal protection (6) of the vessel (4) flange (5) with its lower part providing protection of both the lower section of the cantilever truss (3) and the upper section of the vessel (4) flange (5) thermal protection (6) against the thermal radiation impact of the corium surface. The geometric characteristics such as the distance between the external surface of the thermal protection (9) and the internal surface of the thermal protection (6) of the vessel (4) flange (5) and the height of overlapping between the said thermal protections (9) and (6) are selected in such a way so that the slit formed due to such overlapping prevents any direct shock impacts on the leak-tight junction area between the vessel (4) and the cantilever truss (3) both from the moving corium and from the dynamic gas streams escaping out of the reactor pressure vessel (2).

In terms of design, the thermal protection (9) may consist of different components, for example, shells, rods, sheets and other components enabling to arrange a circular structure providing for protection against the thermal radiation impact of the corium surface.

As shown in Figs. 1 and 2, the convex membrane (11) consists of vertically oriented sectors (12) connected to each other with the use of weld joints (13). The membrane (11) is installed between the vessel (4) flange (5) and the lower surface of the cantilever truss (3) within the space located behind the external surface of the thermal protection (9) and provides for sealing of the vessel (4) in order to protect it against flooding with water supplied for its external cooling.

Besides, the membrane (11) ensures independent radial and azimuthal thermal expansions of the cantilever truss (3) as well as axial and radial thermal expansions of the vessel (4), provides for independent movements of the cantilever truss (3) and the vessel (4) under any mechanical shock impacts on the components of equipment of the corium localizing and cooling system of the nuclear reactor.

In order to maintain the functions of the membrane (11) at the initial stage of the corium supply from the reactor pressure vessel (2) to the vessel (4) and the related pressure increase, the membrane (11) is located within the protected space formed by the thermal protection (6) of the vessel (4) flange (5) and the thermal protection (9) suspended to the cantilever truss (3).

Prior to commencement of the cooling water supply into the vessel (4) onto the crust, gradual destruction of the thermal protection (6) of the vessel (4) flange (5) takes place, and the overlapping area between the thermal protections (6), (9) is gradually reduced till complete destruction of the overlapping zone. The impact of thermal radiation from the corium surface on the membrane (11) begins from this moment. The membrane (11) starts to get heated from the inside, but due to its small thickness the radiant heat flux cannot cause destruction of the membrane (11) if the membrane (11) is below the cooling water level. Additional heating of the guide plate (1) and the reactor pressure vessel (2) head with the corium remnants supported by it takes place within the same period. Subsequent to start of the cooling water supply into the vessel (4) onto the crust on the corium surface via the valves (8), the membrane (11) continues to perform its functions for sealing of the internal space of the vessel (4) and separation of the internal and external media. In the mode of stable water cooling of the external vessel (4) surface, the membrane (11) does not get destroyed due to cooling with water on the outer side. However, the state of the reactor pressure vessel (2) head and the small quantity of corium inside it can change that can result in falling of the reactor pressure vessel (2) head fragments with the corium remnants into the vessel (4) causing dynamic impact of the corium on the thermal protection (6) of the vessel (4) flange (5) and the flange (5) itself and leading to pressure increase due to interaction of the corium with water. Interaction of the corium with water is possible under the conditions when a firm crust on the corium surface has not formed yet, and remnants of the corium (which has not yet hardened due to the initiated steam cooling) are present on the reactor pressure vessel (2) head that is possible only within a period of time not exceeding 30 minutes in the absence of almost any water on the surface of the slag cap covering the surface of the thin crust above the corium surface at the very beginning of the corium surface cooling with water. Under these conditions the entire volume of cooling water supplied onto the slag cap from the top evaporates and cools the structures located above. When accumulation of water on the slag cap begins, i.e. the water flow rate for evaporation starts to lag behind the water supply to the vessel (4), the crust on the corium surface begins to grow rapidly. The crust growth is non-uniform: the thickest crust is formed near the inner surface of the vessel (4), and a thin crust is formed on the corium surface in the central part of the vessel (4). Under these conditions, falling of the reactor pressure vessel (2) head fragments can break the thin crust, and the corium ejected onto the crust surface as a result of the shock impact can react with water generating a shock wave, or no collapse of the reactor pressure vessel (2) head fragments will occur, but the corium remnants will pour onto the corium crust covered with water that can also cause generation of a shock wave due to steam explosion.

As shown in Fig. 3, the external and internal bandage plates (18), (19) installed on the external and internal side of the membrane (11) and ensuring fixed changes of the geometrical characteristics of the membrane (11) within the limits of the external and internal safety bandage gaps (24), (25) are used to protect the membrane (11) against destruction in case of pressure increase inside the vessel (4). As the shock wave in case of pressure increase propagates asymmetrically in relation to the vessel (4) axis, and the gap (a rupture as a result of destruction or melt-through) between the destroyed thermal protection (9) and the thermal protection (6) of the vessel (4) flange (5) changes randomly in the azimuthal direction (for example, with regard to the area, depth or structure), the impact of the shock wave on the membrane (11) will comprise both forward and backward pressure waves confronted by the external and internal bandage plates (18), (19) respectively. The external and internal bandage plates (18), (19) are located symmetrically on each side of the membrane (11) and prevent development of any oscillatory processes and resonance phenomena in the membrane (11) for considerable reduction of antinode in the membrane (11) under the impact of forward and backward pressure waves.

Upward direction is a peculiarity of the shock wave movement. Under these conditions the lower flange (15) of the membrane (11), the lower section of the membrane (11) and the lower sections of the external and internal bandage plates (18), (19) take up the shock load first. Deformation of the membrane (11) increases in the upward direction. The upper ends of the external and internal bandage plates (18), (19) are fastened rigidly (for example, with weld joints (20)) to the upper flange (14) of the membrane (11) with the fixed external and internal safety gaps (24), (25) providing for reduction of the membrane (11) deformation amplitude in the course of the upward shock wave movement in order to prevent destruction of the membrane (11).

Upon the corium entry to the filler (7) the vessel (4) is heated gradually putting compression pressure on the membrane (11). Axial and radial movement of the membrane (11) independent from the movement of the external and internal bandage plates (18), (19) shall be ensured so that the membrane (11) could perform its compensatory functions. The requirement for independence of movements is associated with considerable difference in stiffness of the membrane (11) and the external and internal bandage plates (18), (19) due to the necessity for the membrane (11) protection against the impact of shock waves. Practical independence of movements is achieved, for example, by installation of the external and internal fasteners (21), (22) providing for free movement of the external and internal bandage plates (18), (19) on the lower flange (15) of the membrane (11) with the external and internal safety bandage gaps (24), (25).

The safety bandage gaps (24), (25) provide for free movement of the membrane (11) in case of any thermal expansions of the vessel (4) and the cantilever truss (3), mechanical movements of the membrane (11) in case of any membrane oscillations of the cantilever truss (3) and azimuthal and radial oscillations of the vessel (4) flange (5), blocking of any radial alternating movements of the membrane (11) under the shock wave impact on the reactor pressure vessel (2) side in case of the reactor pressure vessel head destruction with corium, blocking of any radial alternating movements of the membrane (11) under the impact of the shock wave generated at the initial stage of the corium surface cooling in case of falling of any reactor pressure vessel (2) head fragments or corium remnants into the vessel (4).

As shown in Fig. 4, the movement range of the lower ends of the bandage plates is limited with the retainers (26) of the adjusting nuts (27), (28) provided in the fasteners (21), (22). The retainers (26) ensure fixation of the adjusting nuts (27), (28) during their unscrewing in the course of installation of the adjusting gaps (29), (30) between the adjusting nuts (27), (28) and the bandage plates (18), (19) into the design position. The fixed adjusting gaps (29), (30) provide the possibility for the membrane (11) movement independent from the bandage plates (18), (19) within the area of permissible mechanical and thermal displacements. In case of any membrane movement in excess of the permissible values, for example, under the impact of a direct shock wave, the external bandage plates (18) take up the adjusting gap (29) completely moving along the external fasteners (21) and abut against the external adjusting nut (27), and the membrane (11) takes up the external safety bandage gap (24) and abuts against the external bandage plates (18) preventing its destruction. In case of any backward shock wave impact on the membrane (11), the internal bandage plates (19) take up the adjusting gap (29) completely moving along the internal fasteners (22) and abut against the internal adjusting nut (28), and the membrane (11) takes up the internal safety bandage gap (25) and abuts against the internal bandage plates (19) preventing its destruction.

In the course of the transportation and handling operations the external and internal bandage plates (18), (19) are fixed rigidly with the use of external and internal adjusting nuts (27), (28) in order to prevent any damage of the membrane (11), and during installation into the design position the external and internal adjusting nuts (27), (28) are unscrewed all the way to the retainers (26). In this case, the external and internal adjusting gaps (29), (30) providing for free upward movement of the lower flange (15) of the membrane (11) during thermal expansions of the vessel (4) due to sliding of the external and internal bandage plates (18), (19) along the lower flange (15) of the membrane (11) are formed.

Reliable fastening of the membrane (11) to the cantilever truss (3) and the vessel (4) shall be ensured under the impact of shock waves on the membrane (11). For this purpose, the upper flange (14) of the membrane (11) is installed on the upper heat-conducting element (16) fastened to the cantilever truss (3) forming a sort of a pocket (23) (shown in Fig. 3) together with the upper flange (14) and the upper heat-conducting element (16) which provides for efficient heat exchange with the external medium (cooling water or steam-water mixture). The pocket (23) for convective heat exchange is required to protect the upper flange (14) and the upper heat-conducting element (16) against overheating prior to commencement of the corium surface cooling thus enabling to maintain the strength characteristics of these components for resistance to shock loads.

Heat removal in the lower section of the membrane (11) is arranged from the lower flange (15) and the lower heat-conducting element (17) providing for heat removal from the internal fasteners (22) of the internal bandage plates (19).

So, use of the thermal protection installed in the cantilever truss area and the thermal protection of the vessel flange as well as the membrane with bandage plates in the corium localizing and cooling system of a nuclear reactor enabled to enhance its reliability due to prevention of the corium localizing and cooling system destruction within the junction area between the vessel and the cantilever truss under the conditions with non-axisymmetric corium escape from the reactor pressure vessel and falling of reactor pressure vessel head fragments into the vessel at the initial stage of the corium cooling with water, and consequently prevention of any ingress of water intended for external cooling of the vessel into the vessel.

### Sources of information:

1. Russian Patent No. 2575878, IPC G21C 9/016, priority dated 16.12.2014;
2. Russian Patent No. 2576516, IPC G21C 9/016, priority dated 16.12.2014;
3. Russian Patent No. 2576517, IPC G21C 9/016, priority dated 16.12.2014.

## Claims

1. A corium localizing and cooling system of a nuclear reactor, comprising a guide plate, a cantilever truss, a vessel with a filler intended for the corium receipt and distribution, **characterized in that** it additionally comprises thermal protection suspended to the cantilever truss flange, a convex membrane with the upper and lower flanges connected to the upper and lower heat-conducting elements that are attached to the cantilever truss and the vessel flange respectively, bandage plates installed on the external and internal side of the membrane in such a way so that their upper ends are rigidly fastened to the upper flange of the membrane, and the lower ends are fastened to the lower flange of the membrane with the possibility for longitudinal and vertical movement in relation to the lower flange of the membrane.

2. The corium localizing and cooling system of a nuclear reactor according to claim 1, **characterized in that** the upper ends of the bandage plates are attached to the upper flange of the membrane with the use of weld joints.

3. The corium localizing and cooling system of a nuclear reactor according to claim 1, **characterized in that** an aperture is made in the lower ends of the bandage plates and the lower membrane flange, and a fastener equipped with an adjusting nut and a retainer is installed in this aperture.
